(19)

Europäisches Patentamt

European Patent Office

Office européen des brevets

(11) **EP 4 189 825 B1**

(12) **EUROPEAN PATENT SPECIFICATION**

(45) Date of publication and mention
of the grant of the patent:
**23.07.2025 Bulletin 2025/30**

(21) Application number: **21752061.8**

(22) Date of filing: **30.07.2021**

(51) International Patent Classification (IPC):
*H02M 7/483* (2007.01)      *H02M 7/797* (2006.01)
*B60L 53/22* (2019.01)      *B60L 53/24* (2019.01)

(52) Cooperative Patent Classification (CPC):
**H02M 7/483; B60L 53/22; B60L 53/24;**
**H02M 7/4837; H02M 7/797;** B60L 2240/526;
B60L 2240/527; Y02T 10/70; Y02T 10/7072;
Y02T 90/14

(86) International application number:
**PCT/EP2021/071398**

(87) International publication number:
**WO 2022/023527 (03.02.2022 Gazette 2022/05)**

(54) **MULTI-LEVEL BIDIRECTIONAL ELECTRICAL AC/DC CONVERTER**

MEHRSTUFIGER BIDIREKTIONALER ELEKTRISCHER
WECHSELSTROM-GLEICHSTROM-WANDLER

CONVERTISSEUR ALTERNATIF/CONTINU ÉLECTRIQUE BIDIRECTIONNEL À NIVEAUX
MULTIPLES

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.07.2020   NL 2026176**

(43) Date of publication of application:
**07.06.2023   Bulletin 2023/23**

(73) Proprietor: **Prodrive Technologies Innovation**
**Services B.V.**
**5692 EM Son en Breugel (NL)**

(72) Inventors:
• **MENZI, David**
**3400 Burgdorf (CH)**
• **ZHANG, Mafu**
**Austin, TX 78705 (US)**
• **AZURZA, Jon**
**9500 Villach (AT)**
• **KOLAR, Johann Walter**
**8044 Zürich (CH)**

(74) Representative: **IP Maison**
**Sportweg 6**
**2751 ER Moerkapelle (NL)**

(56) References cited:
**CN-B- 104 601 024      US-A1- 2010 013 490**
**US-A1- 2019 255 960**

• ANTIVACHIS MICHAEL ET AL: "Three-phase
buck-boost Y-inverter with wide DC input voltage
range", 2018 IEEE APPLIED POWER
ELECTRONICS CONFERENCE AND
EXPOSITION (APEC), IEEE, 4 March 2018
(2018-03-04), pages 1492 - 1499, XP033347443,
DOI: 10.1109/APEC.2018.8341214
• WANG YAQIANG ET AL: "TCM Controller Design
for Three-Level Bidirectional Soft-Switching DC-
DC Converter", 2019 IEEE 28TH INTERNATIONAL
SYMPOSIUM ON INDUSTRIAL ELECTRONICS
(ISIE), IEEE, 12 June 2019 (2019-06-12), pages
996 - 1001, XP033586050, DOI: 10.1109/
ISIE.2019.8781430

## Description

## Technical field

The present invention is related to a bidirectional AC/DC converter, in particular a three-phase (or multi-phase) bidirectional buck-boost AC/DC converter.

## Background

Three-phase bidirectional buck-boost AC/DC converters represent an interface between arbitrary three-phase AC voltages and a DC voltage where power flow is possible in both directions. Hence the systems can be employed in various technical fields. Typical applications are electric vehicle battery chargers, where a DC output voltage is generated from the three-phase AC grid. There, the DC output voltage varies in a wide range and is adapted based on the batteries rated voltage or charging state, and power can also be fed back from the battery to the grid. Other (active or passive) DC source or load types are also possible and e.g. for photo-voltaic inverters power is fed from a widely varying input DC voltage (which depends both on temperature and extracted current) to the three-phase AC grid. In contrast, battery/fuel-cell powered variable speed motor drives need to generate AC voltages within a wide voltage and frequency range while also the DC (battery or fuel-cell) voltage is subject to large variations.

In the aforementioned applications, DC and AC voltage ranges may overlap yielding the requirement for a converter system with buck-boost capability, whereas typical single-stage rectifier systems are limited to buck or boost operation [1]. The cascaded arrangement of e.g. a three-phase rectifier (either a buck-type Current Source Rectifier (CSR) or a boost-type Voltage Source Rectifier (VSR)) and a subsequent DC/DC converter is a standard solution to enable buck-boost capability, where a performance limit is given by the fact that the complete output power has to be high-frequency converted twice.

Aiming at evermore compact and efficient converter system realizations, Multilevel (ML) Flying Capacitor (FC) bridge-legs enable the use of low voltage semiconductors with improved figure of merit, as well as an elevated effective switching frequency and additional switched voltage levels [2].

Furthermore, phase-modular buck-boost topologies such as the three-phase Y-Inverter [3] are known, consisting essentially of three DC/DC converter modules connected to a common star-point. Each DC/DC converter module comprises two non-isolated half-bridges realizing buck-boost functionality by operating the half-bridges in a mutually exclusive fashion. By so doing, single-stage high-frequency energy conversion is obtained (i.e. in each phase module only one half-bridge is Pulse Width Modulation (PWM) operated at a point in time) without the need for an additional DC/DC converter stage and offering significant efficiency and power density gains [4].

A 6-level flying capacitor (FC) multilevel converter for single-phase buck type power factor correction is known [5]. The FC voltage references are time varying and accordingly FC voltage balancing is performed to assure safe and performant converter operation. Since in [5] the FC bridge-leg is permanently operated, passive balancing strategies are sufficient to assure the FC voltage balancing.

A full-duty-cycle regulated three-level AC/AC converter with self-following flying capacitor is known from [6]. The time varying FC voltage references of the AC/AC converter structure in [6] are imposed by means of a passive 2:1 transformer.

References

[1] J. W. Kolar and T. Friedli. The essence of three-phase pfc rectifier systems-part i. IEEE Transactions on Power Electronics, 28(1):176-198, January 2013. ISSN 0885-8993. doi: 10.1109/TPEL.2012.2197867.

[2] TA Meynard and H Foch. Multilevel choppers for high voltage applications. European Power Electronics (EPE) Journal, 2(1):45-50, Mar. 1992.

[3] M. Antivachis, D. Bortis, L. Schrittwieser, and J. W. Kolar. Three-Phase Buck-Boost Y-Inverter with Wide DC Input Voltage Range. In Proc. of the IEEE Applied Power Electronics Conference and Exposition (APEC), pages 1492-1499, Mar. 2018.

[4] M. Antivachis, D. Bortis, D. Menzi, and J. W. Kolar. Comparative evaluation of y-inverter against three-phase two-stage buck-boost dc-ac converter systems. In Proc. of the IEEE International Power Electronics Conference (IPEC - ECCE Asia), pages 181-189, May 2018.

[5] E. Candan, A. Stillwell, N. C. Brooks, R. A. Abramson, J. Strydom, and R. C. N. Pilawa-Podgurski. A 6-level flying capacitor multi-level converter for single phase buck-type power factor correction. In Proc. of the IEEE Applied Power Electronics Conference and Exposition (APEC), pages 1180-1187, Mar. 2019.

[6] Y. Zhang, H. Jin, and Y. Zhang. Full-duty-cycle regulated three-level ac/ac converter with self- following flying capacitor. IEEE Access, 6:48428-48437, Aug. 2018.

[7] Z. Ye, Y. Lei, Z. Liao, and R. C. N. Pilawa-Podgurski. Investigation of capacitor voltage balancing in practical implementations of flying capacitor multilevel converters. In 2Proc. of the IEEE Workshop on Control and Modeling for Power Electronics (COMPEL), pages 1-7, July 2017.

[8] M. Khazraei, H. Sepahvand, K. A. Corzine, and M. Ferdowsi. Active capacitor voltage balancing in single-phase flying-capacitor multilevel power converters. IEEE Transactions on Industrial Electron- ics, 59(2):769-778, Feb. 2012.

**Summary**

It is therefore an aim of the present disclosure to provide a bidirectional three-phase (multi-phase) electrical AC/DC converter having improved system performance compared to two-level bridge-leg converters. It is an aim of the present disclosure to provide an electrical converter of the above type having a reduced passive component number. The invention is defined by the independent claims. The dependent claims recite advantageous embodiments.

According to a first aspect of the invention, there is therefore provided an electrical converter as set out in the appended claims. Electrical converters as described herein are operable for converting between an AC signal having at least three phase voltages and a DC signal, and can therefore be used for bidirectional power flow.

An electrical converter according to the present disclosure comprises at least three AC terminals, a first and a second DC terminal, a control unit, and at least three converter modules coupled to a respective one of the at least three AC terminals. Each of the at least three converter modules comprises a first converter stage comprising a first switch node, a second converter stage comprising a second switch node, a first inductor, and a first capacitor. The first and second switch nodes are connected to opposite terminals of the first inductor. The respective one of the at least three AC terminals and the second DC terminal are connected to opposite terminals of the first capacitor. The second DC terminal forms a star-point of the first capacitors of the at least three converter modules. The first converter stage is advantageously coupled between the first capacitor and the first switch node. The second converter stage is advantageously coupled between the second switch node and the first and second DC terminals.

According to a first aspect, the first converter stage and the second converter stage each comprise a flying capacitor circuit comprising at least one flying capacitor (also referred to as floating capacitor) operably coupled to the respective first and second switch nodes.

The at least one flying capacitor of the first converter stage advantageously comprises terminals connected to the respective AC terminal and to the second DC terminal (i.e., the at least one flying capacitor is connected across the first capacitor) through first active switching devices. The terminals of the at least one flying capacitor of the first converter stage are advantageously connected to the first switch node through the first active switching devices. The first active switching devices are advantageously series connected between the respective AC terminal and the second DC terminal. The first switch node advantageously forms a midpoint node of the series connected first active switching devices.

Advantageously, each converter module comprises a second capacitor having a first terminal connected to the first DC terminal and a second terminal connected to the second DC terminal. The at least one flying capacitor of the second converter stage advantageously comprises terminals connected to the first DC terminal and to the second DC terminal (i.e., the at least one flying capacitor is connected across the second capacitor) through second active switching devices. The terminals of the at least one flying capacitor of the second converter stage are advantageously connected to the second switch node through the second active switching devices. The second active switching devices are advantageously series connected between the first DC terminal and the second DC terminal. The second switch node advantageously forms a midpoint node of the series connected second active switching devices.

The above electrical converter advantageously combines multi-level converter stages (as compared to two-level converter stages) with a phase modularity. This makes control more simple since each module can be controlled independently. Furthermore, the topology allows for reducing the voltage over the active switching devices of the flying capacitor circuits increasing service life and switching efficiency. Yet additionally, the number of components compared to conventional two-stage buck-boost AC/DC converters can be reduced.

According to a second aspect, one challenge of the above electrical converter is the regulation of the voltage across the flying capacitors of the first converter stage, which experience a varying voltage between the respective AC terminal and the second DC terminal (i.e., the star-point of the first capacitor). The present disclosure contemplates various possibilities for regulating this voltage in a safe way.

Advantageously, the control unit is configured to operate the first converter stage and the second converter stage simultaneously in order to regulate a voltage across the at least one flying capacitor of the first converter stage. Advantageously, the control unit is configured to permanently (i.e., both in buck mode and in boost mode) operate the first active switching devices through PWM. Advantageously the control unit is configured to permanently operate both the first converter stage (the first active switching devices) and the second converter stage (the second active switching devices) through PWM. This allows to regulate the voltage across the at least one flying capacitor of the first converter stage, thereby preventing voltage imbalances, in particular during boost mode, more particularly when a voltage across the first capacitor (between the respective AC terminal and the second DC terminal) is smaller than a voltage across the at least one flying capacitor of the first converter stage.

According to an aspect of the invention, the control unit is configured to operate each of the converter modules such that a flying capacitor voltage across the at least one flying capacitor of the first converter stage is clamped to a first voltage across the first capacitor when the first voltage drops below the flying capacitor voltage. This can readily be obtained by appropriate operation of the first switching devices.

The electrical converter according to the above aspect of the invention allows for obtaining unique voltage reference values leading to improved system performance with a reduced number of passive components. By appropriate clamping of the flying capacitor voltages as described, flying capacitor voltages can be maintained within safe limits thereby preventing voltage imbalances and allowing to obtain an appropriate flying capacitor voltage sharing and maintain high performance and safe operation of the electrical converter. Another advantage of the second embodiment is that the first and second converter stages can be PWM operated mutually exclusively, and hence, e.g. for a three-phase AC to DC converter, only three out of six stages operate at any given point of time, thereby considerably reducing switching losses and increasing service life of the active components.

According to another aspect of the invention, the at least one flying capacitor of the first converter stage is connected to the second DC terminal through an active bidirectional switch (e.g., with bidirectional current blocking capability). Advantageously, all the first active switching devices arranged between the terminal of an innermost flying capacitor of the first converter stage (i.e. closest to the first switch node) and the second DC terminal are active bidirectional switches. This allows to effectively disconnect the flying capacitor(s) of the first converter stage from the second DC terminal and prevent discharge of the flying capacitors of the first converter stage during boost mode operation (when the voltage across the first capacitor drops below the voltage across the respective flying capacitor). Hence, the voltage across the at least one flying capacitor of the first converter stage can be maintained steady in boost mode of operation. It will be convenient to note that this would not be possible when utilizing unidirectional switching devices, since the internal anti-parallel diodes of unidirectional active switching devices would start to conduct when the voltage across the first capacitor drops below the voltage across the respective flying capacitor thereby discharging the flying capacitor.

Advantageously, according to a third aspect, the electrical converter comprises a protection circuit comprising a first balancing capacitor connecting the at least one flying capacitor to the respective one of the at least three AC terminals through a first normally-closed switch. In addition, or alternatively, the protection circuit comprises a second balancing capacitor connecting the at least one flying capacitor to the second DC terminal through a second normally-closed switch. In addition or alternatively, the protection circuit comprises a third normally-closed switch connected between the second switch node and the second DC terminal. The control unit is advantageously configured to disable the normally-closed switches during normal operation. Such a protection circuit acts as a passive balancing circuitry allowing for imposing safe voltage sharing among the flying capacitor stages to assure safety even when the power semiconductors cannot be actively controlled (e.g. in failure mode or during system initialization).

Advantageously, according to a fourth aspect, the control unit is configured to operate a converter module, such that the second converter stage is disabled, and the first switch node is clamped to the second DC terminal when a voltage between the first and second DC terminals is zero during a start-up operation. Alternatively, or in addition, the control unit is configured to operate a converter module, such that a voltage across the at least one flying capacitor of the second converter stage is clamped to a DC voltage between the first and second DC terminals during a ramp up of the DC voltage. These measures, alone or in combination, allow a controlled ramp-up of the DC voltage, while maintaining the flying capacitor voltages within safe bounds.

Above third to fourth aspects, taken alone or in any suitable combination, can be combined with the first and second aspect to yield advantageous embodiments.

According to a further aspect of the present disclosure, there is provided an electric motor drive system as set out in the appended claims.

According to a yet a further aspect of the present disclosure, there is provided an electric battery charging system, as set out in the appended claims.

According to a further aspect of the present disclosure, a method for converting between an AC signal having at least three phase voltages and a DC signal is described herein.

### Brief description of the figures

Aspects of the invention will now be described in more detail with reference to the appended drawings, wherein same reference numerals illustrate same features.

Figure 1 represents an exemplary topology of a three-level flying capacitor AC/DC converter interfacing a three-phase grid and a DC source (e.g. a solar panel) or load (e.g. an electric vehicle battery or a passive load).

Figure 2 represents an exemplary topology of one converter module of the AC/DC converter of Fig. 1.

Figure 3 represents the voltage waveforms and PWM control signals for operating the converter module of Fig. 2.

Figure 4 represents the duty cycles corresponding to the voltage waveforms of Fig. 3.

Figure 5 represents an exemplary embodiment of a control unit for operating the converter module of Fig. 2. The control unit implements a cascaded control structure, and possible measurements are indicated.

Figures 6A-D represent simulation results of the resulting closed loop circuit. Fig. 6A shows the duty cycle waveforms. Figures 6B and 6C show the voltage waveforms. Figure 6D shows the current waveforms.

Figure 7 represents an exemplary topology of a three-level flying capacitor Y-inverter used for driving an AC motor.

Figure 8 represents a cascaded speed control scheme for the three-level flying capacitor Y-inverter of Fig. 7.

Figure 9 represents the converter module topology of Fig. 2 comprising a passive protection circuit.

Figure 10 represents steps of an exemplary start-up procedure of the converter as described herein, in case of a passive load.

Figure 11 represents a DC voltage control scheme that can be used in step 2 of the converter start-up procedure of Fig. 10.

Figure 12 represents closed loop circuit simulation waveforms of the converter of Fig. 2 during a start-up procedure according to Fig. 10. The upper graph represents duty cycles; the middle graph represents voltages and the lower graph represents currents.

Figure 13 represents a topology of a converter module of a hybrid flying capacitor converter according to aspects of the present disclosure having (2N - 1, 2M - 1) voltage levels.

Figure 14 represents AC-side (fA) and DC-side (fB) flying capacitor waveforms for a five-level flying capacitor converter according to aspects of the present disclosure.

Figure 15 represents a battery charging system comprising an electrical converter as described herein.

## Detailed Description

The present disclosure describes a three-phase bidirectional multilevel (ML) flying capacitor (FC) buck-boost AC/DC converter - further denoted as FC Y-rectifier (FC-YR) - which is applicable in any of the above mentioned application fields. The FC-YR combines the advantages of FC converter bridge-legs (i.e. improved system performance compared to two-level bridge-legs) and the Y-inverter (i.e. single-stage energy conversion and reduced passive component number).

In one embodiment, the FC-YR features FC voltages showing unique, time varying reference values, while the respective power semiconductors are high-frequency switched only in one of the two bridge-legs at a time, making it impossible to rely solely on passive FC voltage balancing. In this case, the circuit structure requires a dedicated modulation and control strategy to assure high performance and safe operation, which are described in detail further below. In addition, or alternatively, to allow a controlled ramp-up of the DC voltage, while maintaining all FC voltages within safe bounds, a dedicated modulation strategy and control structure for the start-up of the system can be included, as described further below. In addition, or alternatively, to assure safety even when the power semiconductors cannot be actively controlled (e.g. in failure mode or during system initialization), a passive balancing circuitry, which imposes safe voltage sharing among the FC stages can be included, as described further below.

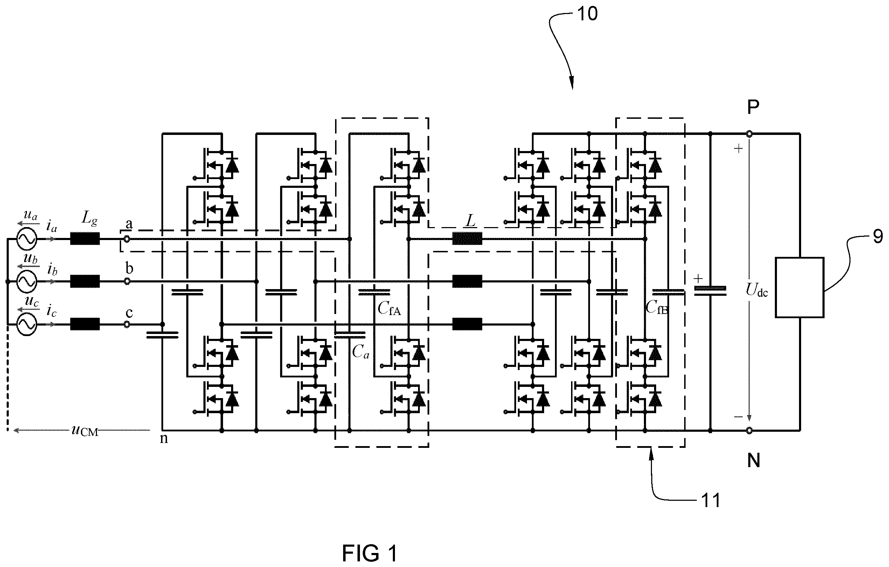

Referring to Fig. 1, the three-phase bidirectional three-level flying capacitor AC/DC converter 10 comprises a main power circuit that interfaces the grid AC voltages $u_a$, $u_b$, $u_c$ applied at AC terminals a, *b*, c, and the DC voltage $U_{dc}$ across DC terminals P, N, which in operation can be connected to an active or passive DC source or load 9. Converter 10 comprises three identical flying capacitor DC-DC buck-boost converter modules 11, of which one such module is shaded grey. An inductive input filter $L_g$ can be provided at the AC terminals as known in the art.

Each of the converter modules 11 comprises an AC terminal a, *b*, or c for connecting to the respective phase of the three-phase AC grid and comprises an AC-side capacitor $C_a$ connecting the AC terminal to the negative DC link terminal n hence forming a common star Y-point amongst the three phases. The potential of each AC terminal *a, b, c*, is strictly defined with respect to *n* and is independent of the remaining two phases. As a result, each converter module can be operated autonomously, as an equivalent single-phase converter.

The voltages between the AC terminals and the negative DC link terminal *n*, i.e. the voltages across the capacitor $C_a$, denoted $u_{an}$, (and for the two other phases *b, c*: $u_{bn}$, and $u_{cn}$) are strictly positive allowing the converter modules to be operated as DC/DC converters. Since the common-mode offset $u_{CM} = 1/3 \, (u_{an} + u_{bn} + u_{cn})$ has no corresponding current path, sinusoidal grid currents $i_a$, $i_b$, $i_c$ can be regulated. $u_{CM}$ is only constrained by the requirement of strictly positive terminal voltages and can be used to enable e.g. Discontinuous Pulse Width Modulation (DPWM).

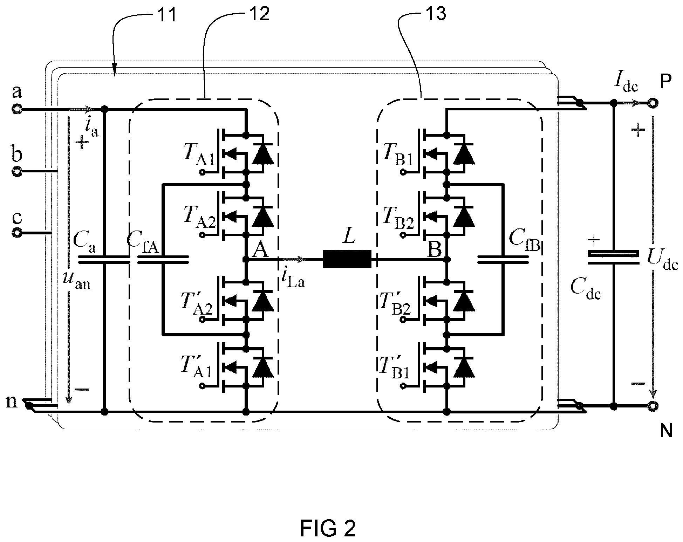

The three converter modules 11 of the converter 10 are hence operated independently and therefore the topology and operation is explained in detail only for converter module 11 linked to AC terminal a which is represented in Fig. 2. In the following, rectifier operation is described, even though it will be apparent to the skilled person that inverter operation can be obtained in likewise fashion.

Converter module 11 comprises two stages 12 and 13. Each stage 12, 13 is advantageously formed of a flying capacitor converter circuit with $C_{fj}$ with $j$ = 1, 2, ..., $M$-1 flying capacitors and hence achieving $M$+1 voltage levels ($M{\geq}1$).

In the exemplary embodiment of Fig. 2, stage 12 is connected across the AC-side capacitor $C_a$ on one side and comprises a switch node A on the other side, in between which a flying capacitor circuit comprising at least one flying capacitor $C_{fA}$ is arranged. Active switches $T_{A1}$, $T_{A2}$, $T'_{A1}$, $T'_{A2}$ connect the terminals of flying capacitor $C_{fA}$ between the terminals of $C_a$ (i.e., the AC terminal and the negative DC link $n$) and the switch node A.

Stage 13 comprises, on one side a switch node B, and is connected, on the other side, to the DC terminal P and the negative DC link terminal n (which forms DC terminal N). Advantageously, a DC side capacitor $C_{dc}$ is provided, whose terminals are connected to P and N, respectively. A flying capacitor circuit comprising at least one flying capacitor $C_{fB}$ is arranged between switch node B and the DC terminals P and N (n). Active switches $T_{B1}$, $T_{B2}$, $T'_{B1}$, $T'_{B2}$ connect the terminals of flying capacitor $C_{fB}$ between switch node B and the DC terminals P, N (advantageously the terminals of $C_{dc}$).

Switch nodes A and B are connected to opposite terminals of a physical inductor $L$.

The above topology allows for obtaining buck-boost AC/DC conversion for each of the three phases *a, b, c* separately. As will be explained in detail below, stage 12 is operated when buck converter operation is required, whereas stage 13 is operated when boost converter operation is required. The buck and boost stages are advantageously operated in a mutually exclusive fashion, meaning that only one of the two stages 12, 13 are pulse width modulated at a point of time, while the other stage has its switch node A, B clamped to the respective AC terminal, e.g. a, and the positive DC terminal P, respectively. By so doing, single-stage high-frequency energy conversion can be obtained, leading to improved performance.

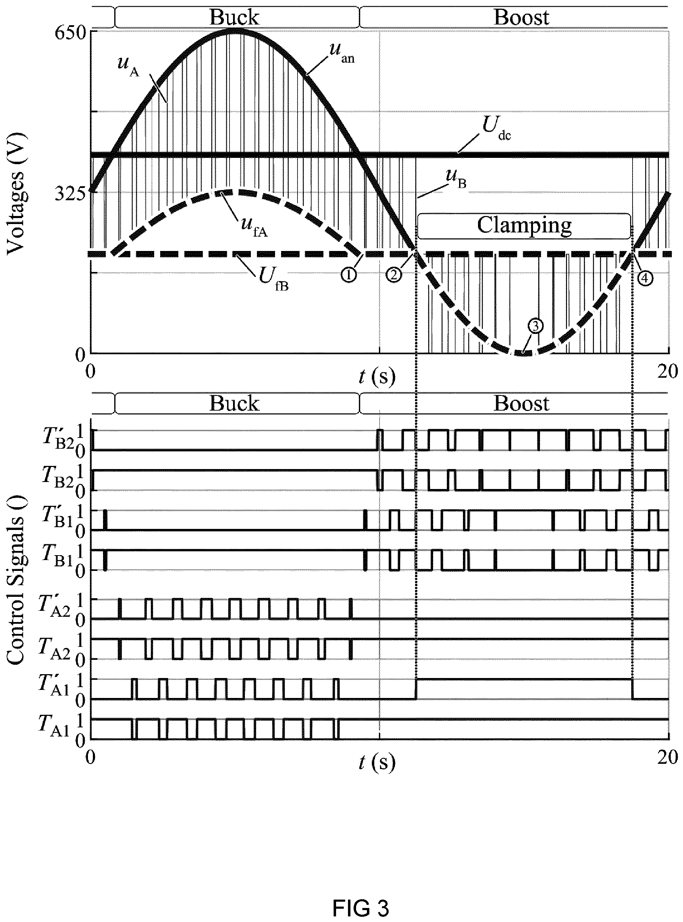

Referring to Fig. 3, in order to achieve single-stage high-frequency energy conversion, the converter module 11 is working depending on the instantaneous modulation depth $m(t) = u_{an}(t)/U_{dc}$ (i.e. the input-output voltage ratio) in one of the two possible operation modes: boost operation, and buck operation.

Boost operation mode (of converter module 11 linked to AC terminal a) is selected when the respective phase input voltage $u_{an}$ is lower than $U_{dc}$. The upper switches $T_{A1}$ and $T_{A2}$ of the buck bridge are permanently turned on and hence the switch node A of stage 12 is clamped to the AC terminal voltage. The boost stage 13 is controlled through pulse width modulation (PWM) such that the voltage of switch node B has a local average value (i.e. averaged over one pulse period) equal to the AC terminal voltage. In this mode of operation, a second order input filter is advantageously formed by the phase inductor $L$ and the AC-side capacitor $C_a$.

Buck operation mode is selected when $u_{an}$ exceeds $U_{dc}$. The upper switches $T_{B1}$ and $T_{B2}$ of the boost bridge are permanently turned on and the switch node B of the boost stage 13 is clamped to the positive DC link rail (terminal P). Stage 12 is now PWM operated in order to step down the AC terminal voltage, such that the voltage of switch node A has a local average value equal to the DC voltage $U_{dc}$. In this operation mode, solely the AC-side capacitor $C_a$ is acting as an input filter and the inductor current $i_{La}$ shows an elevated fundamental (local average) current $(i_{La}) \geq i_a$.

The active switches $T_{A1}$, $T_{A2}$, $T'_{A1}$, $T'_{A2}$ of the buck stage 12 and $T_{B1}$, $T_{B2}$, $T'_{B1}$, $T'_{B2}$ of the boost stage 13 are advantageously semiconductor switching devices, e.g. Field Effect Transistors (FETs), in particular MOSFET devices.

Accordingly, the stages 12, 13 of converter module 11 are operated with time varying duty cycles $d_A$ of the buck stage 12 and $d_B$ of the boost stage 13 which can be defined by:

$$d_A(t) = \min\left(1, \frac{1}{m(t)}\right)$$

$$d_B(t) = \min(1, m(t)).$$

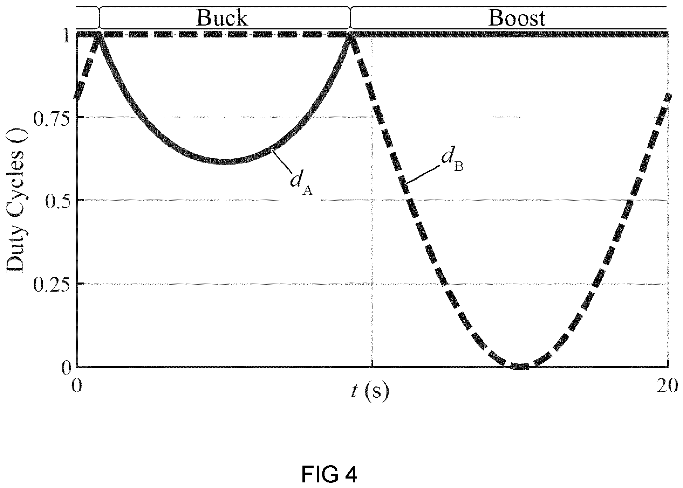

The duty cycles are graphically represented in Fig. 4. These duty cycles ensure the mutually exclusive high-frequency operation of buck and boost stages 12, 13 respectively. Also, as can be seen from Fig. 4, both duty cycles $d_A$, and $d_B$ are advantageously continuous, allowing a simple control structure, avoiding transient oscillations during the changeover of the modulation regions.

The duty cycles $d_A$, and $d_B$ are fed into both half-bridges of stage 12 and 13 respectively. During PWM operation of either stage 12 and 13, the active switches arranged at opposite positions in the bridge are operated in inverse synchronized mode, e.g. when $T_{A1}$ is turned on, $T'_{A1}$ is turned off and vice versa. Same holds for the switch pairs $T_{A2}$ and $T'_{A2}$, $T_{B1}$ and $T'_{B1}$, $T_{B2}$ and $T'_{B2}$. The PWM control signals for the active switches can be generated in a known manner using, for the case of two switch pairs for each half-bridge, 180° phase shifted PWM carriers for the outer (i.e. $T_{A1}$ and $T'_{A1}$ in stage 12) and inner (i.e. $T_{A2}$ and $T'_{A2}$ in stage 12) half-bridges of each stage (Fig. 3). More generally, if the stage comprises $M-1$ flying capacitors $C_{fj}$ with $j$ = 1, 2, ..., M-1, the PWM control signals for driving two consecutive switch pairs can be phase shifted by 360°/M. By doing so, the inductor current $i_{La}$ equally charges and discharges the flying capacitors during one switching period and natural balancing of the flying capacitor voltages can be obtained. As a result, $M+1$ different voltage levels can be obtained at the switch node.

Present inventors have however observed that the natural balancing only holds if the respective stage is high-frequency operated. If the converter module 11 is running e.g. in buck operation (i.e. $m > 1$), the switch node B of stage 13 is clamped to the positive DC link rail (DC terminal P) and $C_{fB}$ is bypassed and hence remains at constant voltage. Given the ideally constant FC voltage $U_{fB} = U_{dc}/2$ (cf. Fig. 3), the operation of the boost stage 13 is found to be unproblematic and greatly resembles a multilevel flying capacitor voltage source rectifier.

In contrast, maintaining the stage 12 FC voltage at $u_{fA} = u_{an}/2$ is only possible during buck operation, and the key time instances for the voltage regulation of $C_{fA}$ are highlighted in Fig. 3. When starting boost operation at position ①, $C_{fA}$ is bypassed and its voltage remains constant at $u_{fA} = U_{dc}/2$. More critical, at position ②, the antiparallel diode of $T'_{A1}$ starts conducting once the input voltage $u_{an}$ falls below $u_{fA}$, paralleling $C_a$ and $C_{fA}$. Accordingly, $C_{fA}$ is fully discharging until position ③. There, the voltage $u_{an}$ starts to rise again and $T'_{A1}$ builds up voltage, while $C_{fA}$ would remain fully discharged if no further measures would be taken, resulting in a massive blocking voltage imbalance between the half-bridges of stage 12, when starting buck operation in the subsequent AC period.

**According** to an aspect of the present disclosure, hence a modulation scheme for the converter module 11 (and stage 12 in particular) comprises the simultaneous turn-on of $T_{A1}$ and $T'_{A1}$ when $u_{fA} < U_{dc}/2$, allowing $C_{fA}$ to be actively clamped to $C_a$ when $u_{an}$ starts rising again at position ③ and is only released once the desired FC voltage level is reached at position ④. By so doing, equal voltage sharing of the switches of stage 12 can be obtained when entering again buck operation in the subsequent AC period.

In a practical realization, a hysteresis block for the clamping logic is advantageously used to assure that the antiparallel diode of $T'_{A1}$ is already conducting at the turn-on instance of $T'_{A1}$, hence assuring zero-voltage switching and avoiding transient oscillations when paralleling $C_a$ and $C_{fA}$.

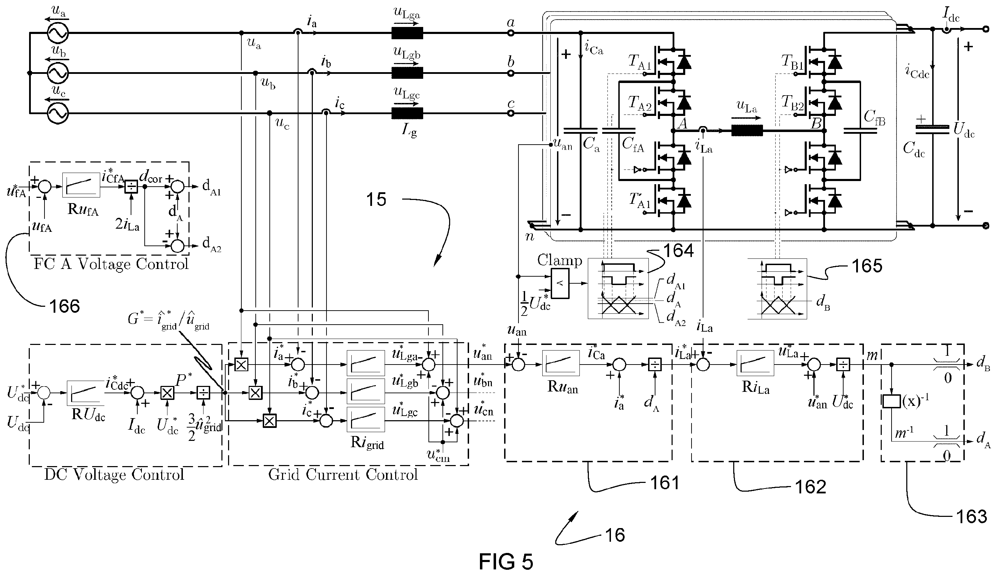

Referring to Fig. 5, the converter 10 comprises a control unit 15 to implement the above modulation strategy. The control unit can comprise individual control modules for operating the different converter modules 11 autonomously. One such control module 16 for operating one converter module 11, e.g. the converter module linked to AC terminal a, is shown schematically in Fig. 5.

The control unit 15 is advantageously configured to perform power factor correction (PFC) rectifier control with a cascaded control structure as known in the art. Measurement means are advantageously provided for measuring the AC grid voltages $u_a, u_b, u_c$ and grid currents $i_a$, $i_b$, $i_c$, and the inductor current $i_{La}$. On the DC side, measurement means are advantageously provided for measuring the DC terminal voltage $U_{dc}$ and advantageously the DC terminal current $I_{dc}$. These measurements are advantageously input to control unit 15.

Sinusoidal grid current references $i_a^*, i_b^*, i_c^*$ are derived based on the DC voltage error and the measured AC voltages $u_a, u_b, u_c$. Then, the AC terminal voltage references $u_{an}^*, u_{bn}^*, u_{cn}^*$ are set in order to enforce the required grid currents. These AC terminal voltage references are fed to the respective control modules 16 for operating each converter module individually.

The control module 16 comprises an AC voltage control block 161, an inductor current control block 162, and a modulator 163. The output signal of the inductor current control block 162 is fed into the modulator 163, generating duty cycles for the mutually exclusive operation of buck stage 12 and boost stage 13.

The control signals for the active switches $T_{A1}$, $T_{A2}$, etc. are then generated using PWM blocks 164 and 165. The clamping logic for the buck stage 12 as described in the present disclosure is advantageously implemented in PWM control block 164.

To enforce the desired time-varying voltage waveform of $C_{fA}$ (cf. Fig. 3), an additional flying capacitor voltage control block 166 is advantageously added to regulate the voltage $u_{fA}$ across the flying capacitors of stage 12. This can be done in a known manner by slightly changing the duration of the redundant flying capacitor charging and discharging intervals by means of a correction duty cycle $d_{cor}$ which is imposed on the duty cycle $d_A$ of stage 12, as further described in [8]. By so doing, a possible insufficient natural FC voltage balancing performance of the stage 12, which may be dependent on how good the capacitor $C_a$ resembles a voltage source, e.g. arising due to dynamic capacitance limitations for $C_a$, is obviated.

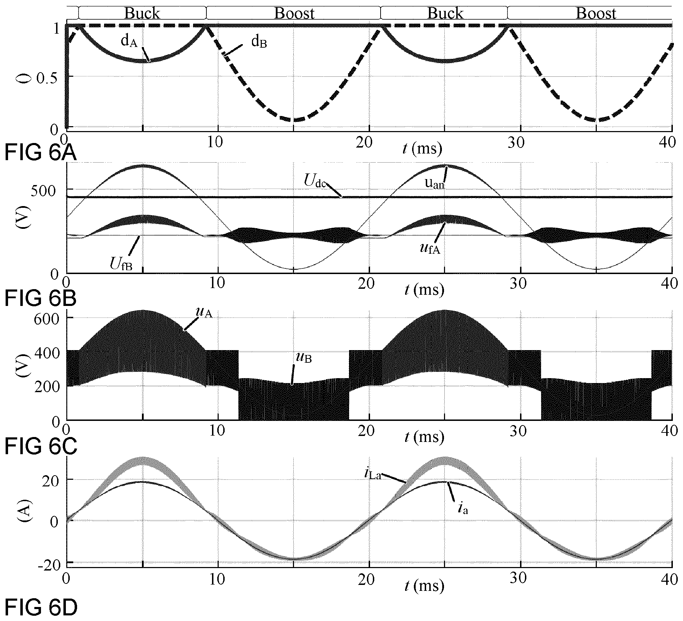

The resulting closed loop circuit simulation duty cycle, current and voltage waveforms are shown in Fig. 6A-C, for $\hat{u}_{ac} = 325$ V, $U_{dc} = 400$ V and output power $P = 9$ kW. As can be observed, sinusoidal grid currents can be achieved, verifying the selected control structure displayed in Fig. 5, where the transition from buck to boost operation (and vice versa) is completely seamless. The FC voltages follow closely the desired voltage profile shown in Fig. 3 despite a substantial high-frequency voltage variation.

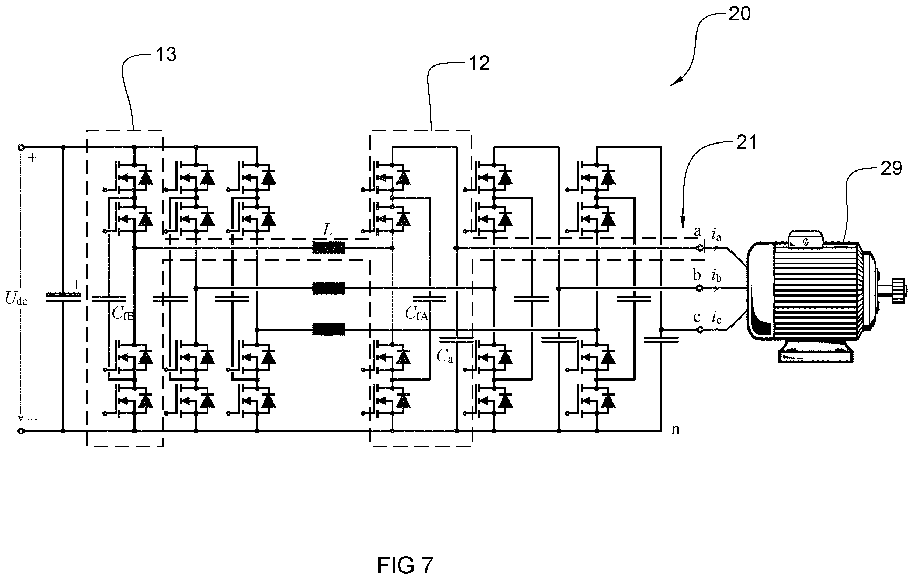

Referring now to Fig. 7, as the converter modules, and in particular stages 12 and 13 allow for bidirectional power flow, a same converter structure as converter 10 can also be employed as an inverter 20, e.g. where a three-phase AC motor 29 is powered from a DC source. As with rectifier applications described hereinabove, the inverter 20 is formed as a three-level flying capacitor Y-inverter with autonomously operating converter modules 21 (one such converter module being shaded grey).

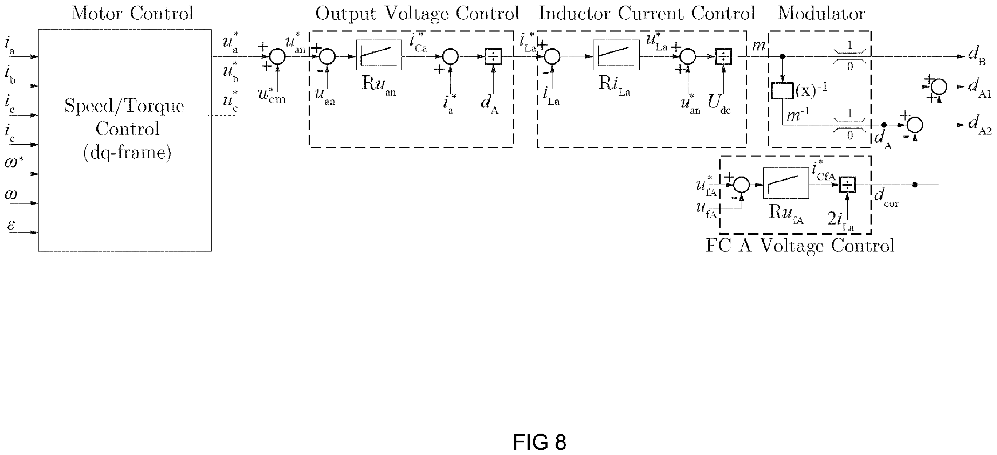

A closed-loop control structure for the inverter 20, in particular for operation as a variable speed drive is outlined in Fig. 8. Speed control based on the angular speed reference $\omega^*$ and measured value $\omega$ is performed in a $dq$ frame (the rotor angle $\epsilon$ is used for the coordinate transformation), yielding the differential mode converter terminal voltage references $u_a^*, u_b^*, u_c^*$. Adding the desired common mode voltage reference, the terminal voltage references with respect to the negative DC link terminal $u_{an}^*, u_{bn}^*, u_{cn}^*$ result and the subsequent phase module control structure is identical to the control strategy of a Y-rectifier as shown in Fig. 5.

In certain operating conditions (e.g. failure mode or during system initialization), the switching devices of stages 12 and 13 are (or need to be) disabled and cannot be actively controlled. Still, the grid line-to-line voltage is impressed on the AC terminals. Since the antiparallel diodes of the stage 12 semiconductor switching devices prevent negative voltages $u_{an}$ and $u_{fA}$, a minimum constant offset $u_{CM} = \hat{u}_{ac}$ is established. In this case, flying capacitor clamping according to the modulation strategy as described herein in relation to Fig. 3 is not possible. To obviate such inconvenience, a passive protection circuit is advantageously provided. The passive protection circuit is configured to impose a safe voltage sharing among the semiconductor switches of stage 12. In one possible embodiment of the passive protection circuit, a balancing resistor is used for voltage balancing the flying capacitors. However, this approach would result in substantial losses.

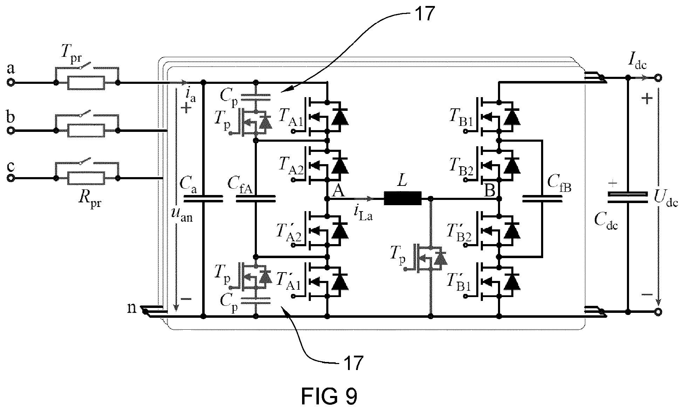

Referring to Fig. 9, an advantageous embodiment of a passive protection circuit 17 according to an aspect of the present disclosure is to connect balancing capacitors $C_p$ with normal-closed (normal-on) switches $T_p$ in parallel with the semiconductor switches $T_{A1}$ and $T'_{A1}$. In other words, the normal-closed (depletion mode) semiconductor switches $T_p$ series connect the balancing capacitors $C_p$ with the flying capacitor $C_{fA}$ and assure equal voltage sharing among the stage 12 semiconductors, while the stage B is clamped to the negative DC link rail to avoid an uncontrolled charging of the DC link. The capacitance value of $C_p$ is advantageously selected such that equal AC voltage sharing results among the stage 12 semiconductor switches, while the antiparallel diodes also establish equal DC bias voltage sharing.

In addition, or alternatively, a normal-closed semiconductor switch $T_p$ is advantageously provided connecting the switch node B of stage 13 to the negative DC link rail in order to prevent an uncontrolled rise of $U_{dc}$, while pre-charging resistors $R_{pr}$ with bypass switch limit inrush currents when connecting the input filter of the converter to the three-phase grid.

In normal operation, the pre-charging resistors are bypassed with switches $T_{pr}$, and the normal-closed semiconductor switches $T_p$ are disabled. The clamping modulation as described herein then allows to ensure that all FC voltages remain within safe boundaries. The output capacitance of the normal-closed semiconductor switches is in parallel with $T_{A1}$ and $T'_{A1}$, hence increasing the switching losses of stage 12. However, normal-closed semiconductor devices with high on-state resistance (and hence low parasitic capacitance) can be selected due to the low current stresses in passive balancing operation.

The passive protection circuitry shown in Fig. 9 advantageously protects the semiconductors from critical overvoltages, limits input filter inrush currents and avoids an uncontrolled pre-charging of the DC output voltage during system initialization when connecting to the three-phase grid.

As soon as the controller is initialized, the normal-closed semiconductor switches $T_p$ of the protection circuit are disabled. However, in case of a passive load (with initially zero DC link voltage) PFC rectifier operation with sinusoidal grid currents is not possible for $U_{dc} \leq U_{dc,min}$.

According to an advantageous aspect of the present disclosure, a dedicated start-up procedure is provided in order to avoid excessive semiconductor voltage stresses while ramping up the DC link voltage in a controlled manner.

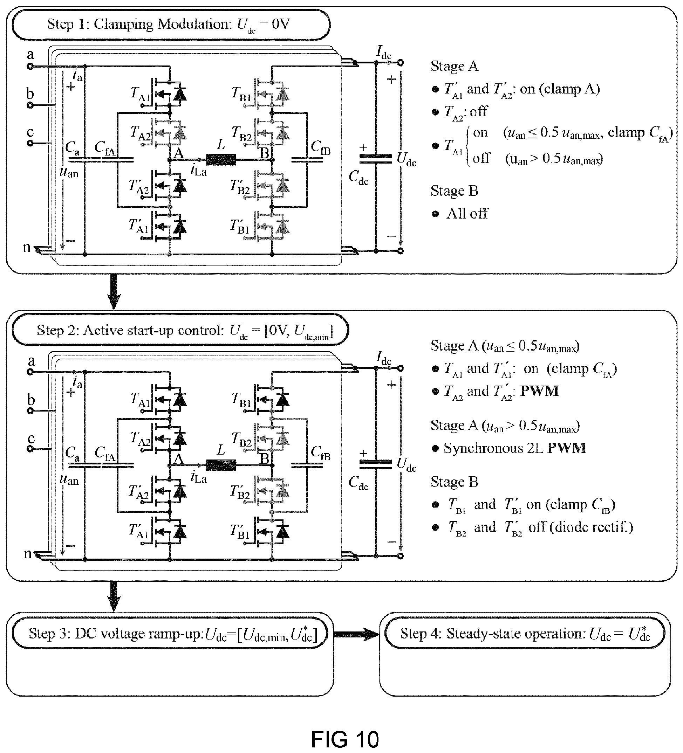

The start-up procedure advantageously comprises four steps, which will be described in relation to Fig. 10. A first step relates to converter operation when the DC link voltage $U_{dc} = 0$ V. $T'_{A1}$ and $T'_{A2}$ are permanently turned on and $T_{A2}$ is permanently disabled to clamp the switch node A of stage 12 to the negative DC link rail and therefore prevent DC link charging currents. Additionally, an active clamping strategy is advantageously used to limit the maximum stage 12 semiconductor blocking voltage. As the power semiconductors are not yet PWM operated, $C_{fA}$ is clamped to the input capacitor (i.e. $T_{A1}$ and $T'_{A1}$ on) if a certain condition on the AC side capacitor voltage $u_{an}$ with respect to the negative DC link rail is met, in particular if $u_{an} <$
$$\frac{1}{2}u_{an,max} = \hat{u}_{ac}$$
, to achieve an equal maximum semiconductor blocking voltage sharing for stage 12. The stage 13 semiconductor switches remain permanently disabled in this initial state.

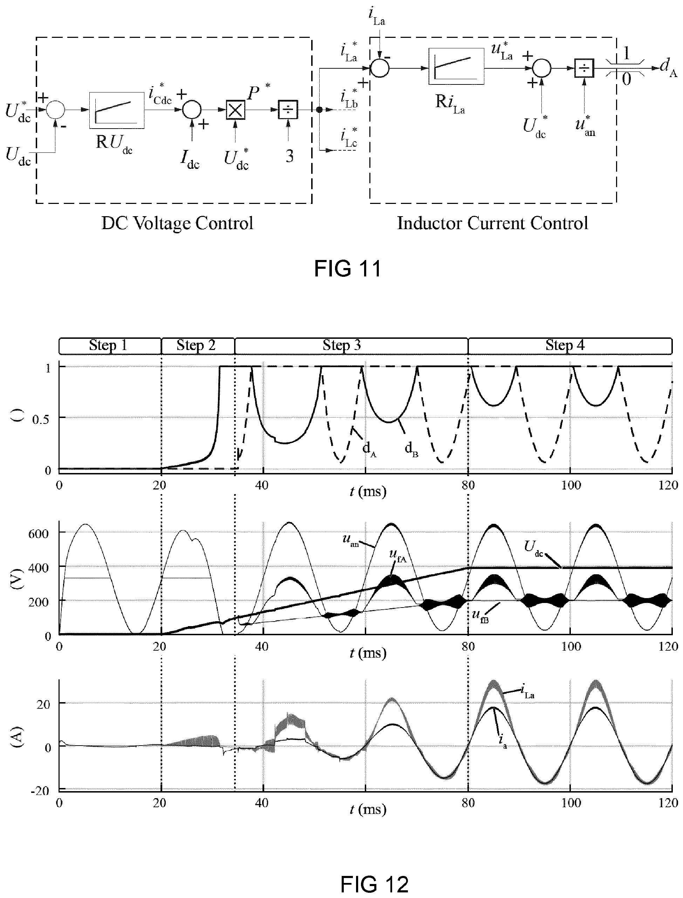

Still referring to Fig. 10, a second step relates to converter operation when the DC link voltage increases up to a predetermined threshold value $U_{dc,min}$, where advantageously the DC link voltage reference
$$U_{dc}^* > U_{dc,min}$$
. As soon as $U_{dc}$ increases beyond 0 V, $C_{fB}$ is clamped to the DC link capacitor $C_{de}$ by turning $T_{B1}$ and $T'_{B1}$ permanently on, while the inner half-bridge of stage 13 ($T_{B2}$ and $T'_{B2}$) remains disabled. In this case, the antiparallel diodes of $T_{B2}$ and $T'_{B2}$ can represent a diode rectifier. By applying PWM pulses to the inductor terminal connected to the switch node A of stage 12 (i.e. stepping down the AC side capacitor voltage $u_{an}$ which is impressed by the grid line-to-line voltages), the DC link voltage can be ramped up. This is advantageously performed in discontinuous conduction mode. An exemplary embodiment of a corresponding control scheme for step 2 is represented in Fig. 11.

Since the clamping modulation of the flying capacitor $C_{fA}$ of stage 12 as described herein requires a minimum load current, the modified clamping modulation strategy from step 1 is maintained in step 2. Accordingly, only $T_{A2}$ and $T'_{A2}$ are PWM operated if $u_{an} \leq 1/2u_{an,max} = \hat{u}_{ac}$. Then, if $u_{an} > 1/2u_{an,max}$, stage 12 is operated as a quasi two-level bridge-leg, where $T_{A1}$ and $T_{A2}$ receive identical PWM signals and the FC voltage $u_{fA}$ remains constant.

As soon as $U_{dc} \geq U_{dc,min}$ (step 3), standard PFC operation with sinusoidal grid current control according to Fig. 5 is possible, while the DC link voltage is further ramped up towards its nominal value. Steady-state operation is achieved in step 4 when $U_{dc}$ attains the nominal value of $U_{dc}^*$ .

The resulting converter waveforms from a closed loop circuit simulation are presented in Fig. 12, where the DC link voltage $U_{dc}$ is linearly ramped up to 400 Vm, while the semiconductor blocking voltage stresses remain balanced, hence confirming the presented start-up strategy for the converters according to the present invention.

In contrast, for e.g. a FC Y-Inverter variable speed drive as described in relation to Fig. 7 no special start-up strategy is required due to the attached DC voltage source and the terminal voltages can be gradually ramped up with increasing motor speed using the control structure depicted in Fig. 8.

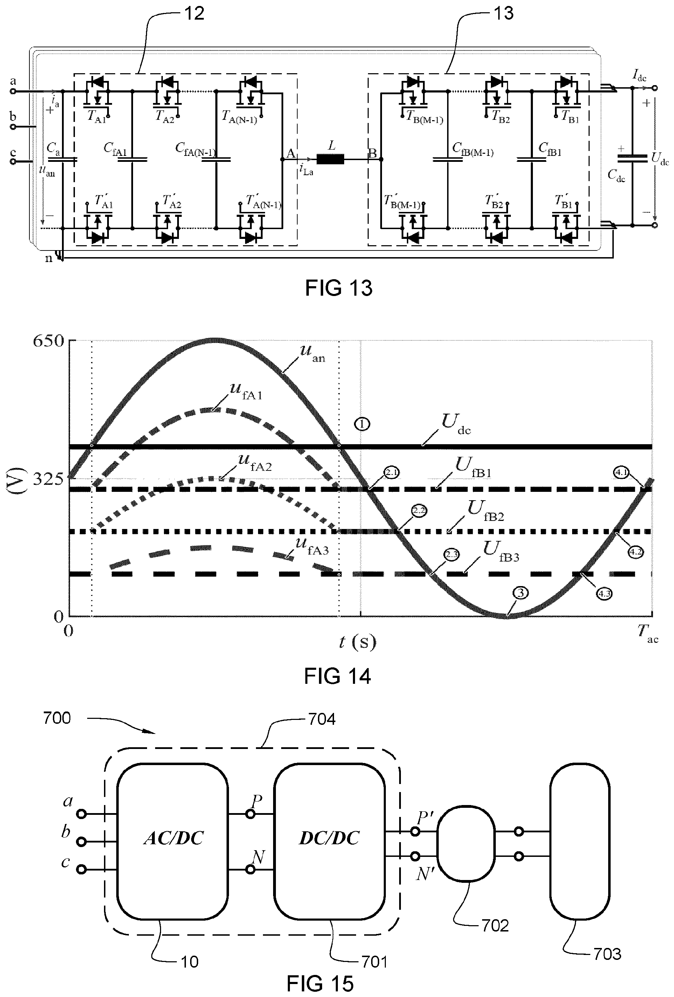

In this invention disclosure, the modulation strategy, control structure, passive protection circuitry, as well as the start-up control scheme are discussed in detail for the three-level Y-rectifier. However, the findings are of generic nature and can also be applied to higher level number FC Y-rectifiers, or also to inverter applications. In particular, it will be convenient to note that the concepts described in the present disclosure are not limited to a three-level flying capacitor converter, but can be applied for any number of voltage levels. Fig. 13 shows the circuit structure of a converter module having a ($N$ + 1, $M$ + 1)-level FC converter with stage 12 flying capacitors $C_{fAj}$, j = 1 to N-1 and stage 13 flying capacitors $C_{fBi,}$ l = 1 to M-1, in which N and M need not be identical, i.e. a hybrid converter with different voltage levels for stage 12 and 13 is possible.

Referring to Fig. 14, the flying capacitor clamping modulation strategy as described hereinabove in relation to a three-level flying capacitor circuit (comprising one flying capacitor $C_{fA}$), can be readily applied to flying capacitor circuits with more than three voltage levels. The clamping modulation is shown in Fig. 14 in relation to a five-level flying capacitor circuit. The AC side flying capacitor voltage waveforms are shown for buck and boost operation. Once buck operation ends and the converter passes to boost mode (i.e. at position ① where $u_{an}$ < $U_{dc}$), all AC side FCs are bypassed and the respective FC voltages remain constant. Each FC is clamped to AC side capacitor $C_a$ once $u_{an}$ drops below the respective FC voltage value, which is different for each FC. Time instances (2.1), (2.2), (2.3) indicate the start and (4.1), (4.2), (4.3) indicating the respective end of the clamping periods of the respective FC.

In an alternative embodiment to the above topology and control strategy, the topology of Fig. 2 can be changed by replacing switch T'$_{A1}$ with a bidirectional switch. Referring again to Fig. 3, the bidirectional switch can be turned off between time positions ② and ④, hence preventing discharge of $C_{fA}$. This allows $u_{fA}$ to remain constant in boost operation. This embodiment, however, would increase the component count and possibly lead to increased conduction losses compared to the previous case.

Referring to FIG. 15, a battery charging system 700 comprises a power supply unit 704. The power supply unit 704 is coupled on one side to the AC grid through terminals a, b, c and on the other side (at terminals P', N') to an interface 702, e.g. comprising a switch device, which allows to connect the power supply unit 704 to a battery 703. The power supply unit 704 comprises any one of the electrical converters, e.g. converter 10, as described hereinabove and can comprise a further converter stage 701, which in the present system is a DC-DC converter. The power supply unit 704, e.g. the converter stage 701, can comprise a pair of coils which are inductively coupled through air (not shown), such as in the case of wireless power transfer. Alternatively, the DC-DC converter stage 701 can comprise or consist of one or more possibly isolated DC-DC converters. In some cases, the interface 702 can comprise a plug and socket, e.g. in wired power transfer. Alternatively, the plug and socket can be provided at the input (e.g., at nodes a, b, c).

## Claims

1. Electrical converter (10, 20) for converting between an AC signal having at least three phase voltages and a DC signal, comprising:

   at least three AC terminals (a, b, c), a first and a second DC terminal (P, N),
   a control unit (15),
   at least three converter modules (11) coupled to a respective one of the at least three AC terminals, wherein each of the at least three converter modules comprises:

   a first converter stage (12) comprising a first switch node (A),
   a second converter stage (13) comprising a second switch node (B),
   a first inductor (L), wherein the first and second switch nodes are connected to opposite terminals of the first inductor,
   a first capacitor ($C_a$), wherein the respective one of the at least three AC terminals and the second DC terminal are connected to opposite terminals of the first capacitor, such that the second DC terminal forms a star-point (n) of the first capacitors ($C_a$) of the at least three converter modules,

   wherein the first converter stage (12) comprises first active switching devices (T$_{A1}$, T'$_{A1}$, T$_{A2}$, T'$_{A2}$) series connected between the respective AC terminal and the second DC terminal, wherein the first switch node (A) is a midpoint node of the series connected first active switching devices,

**characterised in that** the first converter stage (12) and the second converter stage (13) each comprise a flying capacitor circuit comprising at least one flying capacitor ($C_{fA}$, $C_{fB}$) operably coupled to the respective first and second switch nodes (A, B), wherein the first active switching devices comprise a first switch pair ($T_{A1}$, $T'_{A1}$) configured to provide a connection between terminals of the respective at least one flying capacitor ($C_{fA}$) and the respective AC terminal and the second DC terminal, and a second switch pair ($T_{A2}$, $T'_{A2}$) configured to provide a connection between terminals of the respective at least one flying capacitor ($C_{fA}$) and the first switch node (A), and **characterised in that** the control unit (15) is configured to operate the first active switching devices of each of the converter modules (11) such that a flying capacitor voltage ($u_{fA}$) across the at least one flying capacitor of the first converter stage is clamped to a first voltage ($u_{an}$) across the first capacitor when the first voltage ($u_{an}$) drops below a flying capacitor voltage level of the flying capacitor voltage ($u_{fA}$) until the first voltage ($u_{an}$) rises to the flying capacitor voltage level, wherein the control unit is configured to keep both switches of the first switch pair turned on simultaneously when the flying capacitor voltage ($u_{fA}$) is clamped to the first voltage ($u_{an}$) so as to actively clamp the flying capacitor voltage to the first voltage.

2. Electrical converter of claim 1, wherein the control unit is configured to maintain the flying capacitor voltage ($u_{fA}$) at the flying capacitor voltage level when the first voltage ($u_{an}$) across the first capacitor ($C_a$) is higher than the flying capacitor voltage level.

3. Electrical converter for converting between an AC signal having at least three phase voltages and a DC signal, comprising:

   at least three AC terminals (a, b, c), a first and a second DC terminal (P, N),
   a control unit (15),
   at least three converter modules (11) coupled to a respective one of the at least three AC terminals, wherein each of the at least three converter modules comprises:

   a first converter stage (12) comprising a first switch node (A),
   a second converter stage (13) comprising a second switch node (B),
   a first inductor (L), wherein the first and second switch nodes are connected to opposite terminals of the first inductor,
   a first capacitor ($C_a$), wherein the respective one of the at least three AC terminals and the second DC terminal are connected to opposite terminals of the first capacitor, such that the second DC terminal forms a star-point (n) of the first capacitors ($C_a$) of the at least three converter modules,

   wherein the first converter stage (12) comprises first active switching devices series connected between the respective AC terminal and the second DC terminal, wherein the first switch node (A) is a midpoint node of the series connected first active switching devices,
   **characterised in that** the first converter stage (12) and the second converter stage (13) each comprise a flying capacitor circuit comprising at least one flying capacitor ($C_{fA}$, $C_{fB}$) operably coupled to the respective first and second switch nodes (A, B), and **in that** the first active switching devices comprise a first switch ($T_{A1}$) configured to provide a connection between a first terminal of the respective at least one flying capacitor ($C_{fA}$) and the respective AC terminal and an active bidirectional switching device, and comprise a switch pair (TA2, T'A2) configured to provide a connection between terminals of the respective at least one flying capacitor (CfA) and the first switch node (A),
   wherein the second terminal of the at least one flying capacitor ($C_{fA}$) of the first converter stage (12) is connected to the star-point (n) through the active bidirectional switching device,
   wherein the control unit (15) is configured to turn off the active bidirectional switching device when the first voltage ($u_{an}$) drops below a flying capacitor voltage ($u_{fA}$) across the at least one flying capacitor ($C_{fA}$) of the first converter stage.

4. Electrical converter of any one of the preceding claims, wherein the control unit is configured to operate each of the converter modules such that a flying capacitor voltage ($u_{fB}$) across the at least one flying capacitor ($C_{fB}$) of the second converter stage is proportional to a DC voltage ($U_{dc}$) across the first and second DC terminals.

5. Electrical converter of any one of the preceding claims, wherein the control unit comprises at least three control modules (16) coupled to a respective one of the at least three converter modules (11) and configured to operate the at least three converter modules independently, preferably wherein the at least three control modules (16) are configured to determine duty cycles ($d_A$, $d_B$) for operating the first and second converter stage of the respective converter module based on a voltage reference of the first capacitor ($C_a$) of the respective converter module.

**6.** Electrical converter of any one of the preceding claims, wherein the control unit is configured to operate each of the at least three converter modules (11) according to a first mode of operation, wherein a DC voltage ($U_{dc}$) across the first and second DC terminals is smaller than or equal to the first voltage ($u_{an}$) of the respective first capacitor ($C_a$), and according to a second mode of operation, wherein the DC voltage ($U_{dc}$) is larger than the first voltage ($u_{an}$).

**7.** Electrical converter of any one of the preceding claims, wherein the control unit is configured to operate the flying capacitor circuits of the first and second converter stages mutually exclusively via pulse width modulation.

**8.** Electrical converter of any one of the preceding claims, wherein the first converter stage comprises a protection circuit (17), the protection circuit comprising a balancing capacitor ($C_p$) connecting the at least one flying capacitor ($C_{fA}$) of the first converter stage (12) to the respective one of the at least three AC terminals and/or to the second DC terminal through at least one first normally-closed switch ($T_p$), the control unit (15) being configured to disable the at least one first normally-closed switch.

**9.** Electrical converter of any one of the preceding claims, wherein each of the at least three converter modules comprises a second normally-closed switch ($T_p$) connected between the second switch node (B) and the star-point (n), the control unit (15) being configured to disable the second normally-closed switch.

**10.** Electrical converter of any one of the preceding claims, wherein the control unit (15) is configured to operate a converter module (11) of the at least three converter modules, such that the second converter stage (13) is disabled, and the first switch node (A) is clamped to the star-point (n) when a DC voltage ($U_{dc}$) between the first and second DC terminals is zero during a start-up operation, preferably wherein a voltage ($u_{fA}$) across the at least one flying capacitor ($C_{fA}$) of the first converter stage is intermittently clamped to the first voltage ($u_{an}$) when the DC voltage ($U_{dc}$) is zero during a start-up operation.

**11.** Electrical converter of any one of the preceding claims, wherein the control unit is configured to operate a converter module of the at least three converter modules, such that a voltage ($u_{fB}$) across the at least one flying capacitor ($C_{fB}$) of the second converter stage (13) is clamped to a DC voltage ($U_{dc}$) between the first and second DC terminals during a ramp up of the DC voltage.

**12.** Electrical converter of any one of the preceding claims, wherein the first converter stage and the second converter stage comprise an equal number of the at least one flying capacitor ($C_{fA}$, $C_{fB}$), or wherein the first converter stage and the second converter stage comprise a different number of the at least one flying capacitor ($C_{fA}$, $C_{fB}$).

**13.** Electric motor drive system, comprising the electrical converter (20) of any one of the preceding claims, wherein the control unit is configured to operate the electrical converter as a traction inverter.

**14.** Battery charging system, in particular for charging electric vehicle drive batteries, wherein the battery charging system comprises a power supply, the power supply comprising the electrical converter (10) of any one of the claims 1 to 12.

**Patentansprüche**

**1.** Elektrischer Wandler (10, 20) zum Umwandeln zwischen einem mindestens drei Phasenspannungen aufweisendem Wechselstromsignal und einem Gleichstromsignal, umfassend:

mindestens drei Wechselstromanschlüsse (a, b, c), einen ersten und einen zweiten Gleichstromanschluss (P, N),
eine Steuerungseinheit (15),
mindestens drei Wandlermodule (11), die mit einem jeweiligen einen der mindestens drei Wechselstromanschlüsse gekoppelt sind, wobei jedes der mindestens drei Wandlermodule Folgendes umfasst:

eine erste Wandlerstufe (12), umfassend einen ersten Schaltknoten (A),
eine zweite Wandlerstufe (13), umfassend einen zweiten Schaltknoten (B),
einen ersten Induktor (L), wobei der erste und der zweite Schaltknoten mit gegenüberliegenden Anschlüssen des ersten Induktors verbunden sind,
einen ersten Kondensator ($C_a$), wobei der jeweilige eine der mindestens drei Wechselstromanschlüsse und der zweite Gleichstromanschluss mit gegenüberliegenden Anschlüssen des ersten Kondensators verbunden sind, sodass der zweite Gleichstromanschluss einen Sternpunkt (n) der ersten Kondensatoren ($C_a$) der mindestens drei Wandlermodule bildet,

wobei die erste Wandlerstufe (12) erste aktive Schaltvorrichtungen ($T_{A1}$, $T'_{A1}$, $T_{A2}$, $T'_{A2}$) umfasst, die zwischen dem jeweiligen Wechselstromanschluss und dem zweiten Gleichstromanschluss in Reihe verbunden sind, wobei der erste Schaltknoten (A) ein Mittelpunktknoten der in Reihe verbundenen ersten aktiven Schaltvorrichtungen ist,

**gekennzeichnet dadurch, dass** die erste Wandlerstufe (12) und die zweite Wandlerstufe (13) jeweils eine Flying-Capacitor-Schaltung umfassen, die mindestens einen fliegenden Kondensator ($C_{fA}$, $C_{fB}$) umfasst, der betriebsfähig mit dem jeweiligen ersten und zweiten Schaltknoten (A, B) gekoppelt ist, wobei die ersten aktiven Schaltvorrichtungen Folgendes umfassen: ein erstes Schalterpaar ($T_{A1}$, $T'_{A1}$), das dazu konfiguriert ist, eine Verbindung zwischen Anschlüssen des jeweiligen mindestens einen fliegenden Kondensators ($C_{fA}$) und dem jeweiligen Wechselstromanschluss und dem zweiten Gleichstromanschluss bereitzustellen, und ein zweites Schalterpaar ($T_{A2}$, $T'_{A2}$), das dazu konfiguriert ist, eine Verbindung zwischen Anschlüssen des jeweiligen mindestens einen fliegenden Kondensators ($C_{fA}$) und dem ersten Schaltknoten (A) bereitzustellen, und

**gekennzeichnet dadurch, dass** die Steuerungseinheit (15) dazu konfiguriert ist, die ersten aktiven Schaltvorrichtungen von jedem der Wandlermodule (11) so zu betreiben, dass eine Fliegender-Kondensatorspannung ($u_{fA}$) über den mindestens einen fliegenden Kondensator der ersten Wandlerstufe an eine erste Spannung ($u_{an}$) über den ersten Kondensator geklemmt ist, wenn die erste Spannung ($u_{an}$) unter einen Fliegender-Kondensatorspannungspegel der Fliegender-Kondensatorspannung ($u_{fA}$) fällt, bis die erste Spannung ($u_{an}$) auf den Fliegender-Kondensatorspannungspegel ansteigt, wobei die Steuerungseinheit dazu konfiguriert ist, beide Schalter aus dem ersten Schalterpaar gleichzeitig eingeschaltet zu lassen, wenn die Fliegender-Kondensatorspannung ($u_{fA}$) an die erste Spannung ($u_{an}$) geklemmt ist, um die Fliegender-Kondensatorspannung aktiv an die erste Spannung zu klemmen.

2. Elektrischer Wandler nach Anspruch 1, wobei die Steuerungseinheit dazu konfiguriert ist, die Fliegender-Kondensatorspannung ($u_{fA}$) auf dem Fliegender-Kondensatorspannungspegel zu halten, wenn die erste Spannung ($u_{an}$) über den ersten Kondensator ($C_a$) höher ist als der Fliegender-Kondensatorspannungspegel.

3. Elektrischer Wandler zum Umwandeln zwischen einem Wechselstromsignal, das mindestens drei Phasenspannungen aufweist, und einem Gleichstromsignal, umfassend:

mindestens drei Wechselstromanschlüsse (a, b, c), einen ersten und einen zweiten Gleichstromanschluss (P, N), eine Steuerungseinheit (15), mindestens drei Wandlermodule (11), die mit einem jeweiligen einen der mindestens drei Wechselstromanschlüsse gekoppelt sind, wobei jedes der mindestens drei Wandlermodule Folgendes umfasst:

eine erste Wandlerstufe (12), umfassend einen ersten Schaltknoten (A), eine zweite Wandlerstufe (13), umfassend einen zweiten Schaltknoten (B),

einen ersten Induktor (L), wobei der erste und der zweite Schaltknoten mit gegenüberliegenden Anschlüssen des ersten Induktors verbunden sind, einen ersten Kondensator ($C_a$), wobei der jeweilige eine der mindestens drei Wechselstromanschlüsse und der zweite Gleichstromanschluss mit gegenüberliegenden Anschlüssen des ersten Kondensators verbunden sind, sodass der zweite Gleichstromanschluss einen Sternpunkt (n) der ersten Kondensatoren ($C_a$) der mindestens drei Wandlermodule bildet, wobei die erste Wandlerstufe (12) erste aktive Schaltvorrichtungen umfasst, die zwischen dem jeweiligen Wechselstromanschluss und dem zweiten Gleichstromanschluss in Reihe verbunden sind, wobei der erste Schaltknoten (A) ein Mittelpunktknoten der in Reihe verbundenen ersten aktiven Schaltvorrichtungen ist, **gekennzeichnet dadurch, dass** die erste Wandlerstufe (12) und die zweite Wandlerstufe (13) jeweils eine Flying-Capacitor-Schaltung umfassen, die mindestens einen fliegenden Kondensator ($C_{fA}$, $C_{fB}$) umfasst, der betriebsfähig mit dem jeweiligen ersten und zweiten Schaltknoten (A, B) gekoppelt ist, und dadurch, dass die ersten aktiven Schaltvorrichtungen einen ersten Schalter ($T_{A1}$) umfassen, der dazu konfiguriert ist, eine Verbindung zwischen einem ersten Anschluss des jeweiligen mindestens einen fliegenden Kondensators ($C_{fA}$) und dem jeweiligen Wechselstromanschluss und einer aktiven bidirektionalen Schaltvorrichtung bereitzustellen und ein Schalterpaar ($T_{A2}$, $T'_{A2}$) umfasst, das dazu konfiguriert ist, eine Verbindung zwischen Anschlüssen des jeweiligen mindestens einen fliegenden Kondensators ($C_{fA}$) und dem ersten Schaltknoten (A) bereitzustellen, wobei der zweite Anschluss des mindestens einen fliegenden Kondensators ($C_{fA}$) der ersten Wandlerstufe (12) durch die aktive bidirektionale Schaltvorrichtung mit dem Sternpunkt (n) verbunden ist,

wobei die Steuerungseinheit (15) dazu konfiguriert ist, die aktive bidirektionale Schaltvorrichtung abzuschalten, wenn die erste Spannung ($u_{an}$) unter eine Fliegender-Kondensatorspannung ($u_{fA}$) über den mindestens einen fliegenden Kondensator ($C_{fA}$) der ersten Wandlerstufe fällt.

4. Elektrischer Wandler nach einem der vorhergehenden Ansprüche, wobei die Steuerungseinheit dazu konfiguriert ist, jedes der Wandlermodule so zu betreiben, dass eine Fliegender-Kondensatorspannung ($u_{fB}$) über den mindestens einen fliegenden Kondensator ($C_{fB}$) der zweiten Wandlerstufe proportional zu einer Gleichstromspannung ($U_{dc}$) über die ersten und zweiten Gleichstromanschlüsse ist.

5. Elektrischer Wandler nach einem der vorhergehenden Ansprüche, wobei die Steuerungseinheit mindestens drei Steuerungsmodule (16) umfasst, die mit einem jeweiligen der mindestens drei Wandlermodule (11) gekoppelt sind und dazu konfiguriert sind, die mindestens drei Wandlermodule unabhängig zu betreiben, wobei bevorzugt die mindestens drei Steuerungsmodule (16) dazu konfiguriert sind, Arbeitszyklen ($d_A$, $d_B$) zum Betreiben der ersten und zweiten Wandlerstufe des jeweiligen Wandlermoduls auf Basis einer Spannungsreferenz des ersten Kondensators ($C_a$) des jeweiligen Wandlermoduls zu bestimmen.

6. Elektrischer Wandler nach einem der vorhergehenden Ansprüche, wobei die Steuerungseinheit dazu konfiguriert ist, jedes der mindestens drei Wandlermodule (11) gemäß einem ersten Betriebsmodus zu betreiben, wobei eine Gleichstromspannung ($U_{dc}$) über den ersten und den zweiten Gleichstromanschluss kleiner als oder gleich der ersten Spannung ($u_{an}$) des jeweiligen ersten Kondensators ($C_a$) ist, und gemäß einem zweiten Betriebsmodus, wobei die Gleichstromspannung ($U_{dc}$) größer als die erste Spannung ($u_{an}$) ist.

7. Elektrischer Wandler nach einem der vorhergehenden Ansprüche, wobei die Steuerungseinheit dazu konfiguriert ist, die Flying-Capacitor-Schaltungen der ersten und zweiten Wandlerstufe wechselseitig ausschließlich über Pulsweitenmodulation zu betreiben.

8. Elektrischer Wandler nach einem der vorhergehenden Ansprüche, wobei die erste Wandlerstufe eine Schutzschaltung (17) umfasst, wobei die Schutzschaltung einen Abgleichkondensator ($C_p$) umfasst, der den mindestens einen fliegenden Kondensator ($C_{fA}$) der ersten Wandlerstufe (12) mit dem jeweiligen einen der mindestens drei Wechselstromanschlüsse und/oder mit dem zweiten Gleichstromanschluss durch mindestens einen ersten normalerweise geschlossenen Schalter ($T_p$) verbindet, wobei die Steuerungseinheit (15) dazu konfiguriert ist, den mindestens einen ersten normalerweise geschlossenen Schalter zu deaktivieren.

9. Elektrischer Wandler nach einem der vorhergehenden Ansprüche, wobei jedes der mindestens drei Wandlermodule einen zweiten normalerweise geschlossenen Schalter ($T_p$) umfasst, der zwischen dem zweiten Schaltknoten (B) und dem Sternpunkt (n) verbunden ist, wobei die Steuerungseinheit (15) dazu konfiguriert ist, den zweiten normalerweise geschlossenen Schalter zu deaktivieren.

10. Elektrischer Wandler nach einem der vorhergehenden Ansprüche, wobei die Steuerungseinheit (15) dazu konfiguriert ist, ein Wandlermodul (11) der mindestens drei Wandlermodule zu betreiben, sodass die zweite Wandlerstufe (13) deaktiviert ist, und der erste Schaltknoten (A) an den Sternpunkt (n) geklemmt ist, wenn eine Gleichstromspannung ($U_{dc}$) zwischen dem ersten und dem zweiten Gleichstromanschluss während eines Anfahrbetriebs Null ist, wobei bevorzugt eine Spannung ($u_{fA}$) über den mindestens einen fliegenden Kondensator ($C_a$) der ersten Wandlerstufe intermittierend an die erste Spannung ($u_{an}$) geklemmt ist, wenn die Gleichstromspannung ($U_{dc}$) während eines Anfahrbetriebs Null ist.

11. Elektrischer Wandler nach einem der vorhergehenden Ansprüche, wobei die Steuerungseinheit dazu konfiguriert ist, ein Wandlermodul der mindestens drei Wandlermodule so zu betreiben, dass eine Spannung ($u_{fB}$) über den mindestens einen fliegenden Kondensator ($C_{fB}$) der zweiten Wandlerstufe (13) während eines Hochfahrens einer Gleichstromspannung zwischen den ersten und den zweiten Gleichstromanschluss an die Gleichstrompannung ($U_{dc}$) geklemmt ist.

12. Elektrischer Wandler nach einem der vorhergehenden Ansprüche, wobei die erste Wandlerstufe und die zweite Wandlerstufe eine gleiche Anzahl des mindestens einen fliegenden Kondensators ($C_{fA}$, $C_{fB}$) umfassen, oder wobei die erste Wandlerstufe und die zweite Wandlerstufe eine unterschiedliche Anzahl des mindestens einen fliegenden Kondensators ($C_{fA}$, $C_{fB}$) umfassen.

13. Elektrisches Motorantriebssystem, umfassend den elektrischen Wandler (20) nach einem der vorhergehenden Ansprüche, wobei die Steuerungseinheit dazu konfiguriert ist, den elektrischen Wandler als einen Traktionswechselrichter zu betreiben.

14. Batterieladesystem, insbesondere zum Laden von Antriebsbatterien für elektrische Fahrzeuge, wobei das Batterieladesystem eine Stromversorgung umfasst, wobei die Stromversorgung den elektrischen Wandler (10) nach einem der Ansprüche 1 bis 12 umfasst.

## Revendications

1. Convertisseur électrique (10, 20) pour assurer la conversion entre un signal CA ayant au moins trois tensions de phase et un signal CC, comprenant :

   au moins trois bornes CA (a, b, c), une première et une deuxième borne CC (P, N),
   une unité de commande (15),
   au moins trois modules convertisseurs (11) couplés à l'une respective des au moins trois bornes CA, dans lequel chacun des au moins trois modules convertisseurs comprend :

   un premier étage de convertisseur (12) comprenant un premier nœud de commutation (A),
   un deuxième étage de convertisseur (13) comprenant un deuxième nœud de commutation (B),
   un premier inducteur (L), dans lequel les premier et deuxième nœuds de commutation sont connectés à des bornes opposées du premier inducteur,
   un premier condensateur ($C_a$), dans lequel l'une respective des au moins trois bornes CA et la deuxième borne CC sont connectées à des bornes opposées du premier condensateur, de telle sorte que la deuxième borne CC forme un point neutre (n) des premiers condensateurs ($C_a$) des au moins trois modules convertisseurs,

   dans lequel le premier étage de convertisseur (12) comprend des premiers dispositifs de commutation actifs ($T_{A1}$, $T'_{A1}$, $T_{A2}$, $T'_{A2}$) connectés en série entre la borne CA respective et la deuxième borne CC, dans lequel le premier nœud de commutation (A) est un nœud médian des premiers dispositifs de commutation actifs connectés en série,
   **caractérisé en ce que** le premier étage de convertisseur (12) et le deuxième étage de convertisseur (13) comprennent chacun un circuit à condensateur volant comprenant au moins un condensateur volant ($C_{fA}$, $C_{fB}$) couplé de manière opérationnelle aux premier et deuxième nœuds de commutation (A, B) respectifs,
   dans lequel les premiers dispositifs de commutation actifs comprennent une première paire de commutateurs ($T_{A1}$, $T'_{A1}$) configurée pour assurer une connexion entre les bornes de l'au moins un condensateur volant ($C_{fA}$) respectif et la borne CA respective et la deuxième borne CC, et une deuxième paire de commutateurs ($T_{A2}$, $T'_{A2}$) configurée pour assurer une connexion entre les bornes de l'au moins un condensateur volant ($C_{fA}$) respectif et le premier nœud de commutation (A), et **caractérisé en ce que** l'unité de commande (15) est configurée pour faire fonctionner les premiers dispositifs de commutation actifs de chacun des modules convertisseurs (11) de telle sorte qu'une tension du condensateur volant ($u_{fA}$) aux bornes de l'au moins un condensateur volant du premier étage de convertisseur est fixée à une première tension ($u_{an}$) aux bornes du premier condensateur lorsque la première tension ($u_{an}$) chute en dessous d'un dit niveau de tension de la tension du condensateur volant ($u_{fA}$) jusqu'à ce que la première tension ($u_{an}$) augmente audit niveau de tension, dans lequel l'unité de commande est configurée pour maintenir les deux commutateurs de la première paire de commutateurs allumés simultanément lorsque la tension du condensateur volant ($U_{fA}$) est fixée à la première tension ($u_{an}$) afin de fixer activement la tension du condensateur volant à la première tension.

2. Convertisseur électrique selon la revendication 1, dans lequel l'unité de commande est configurée pour maintenir la tension du condensateur volant ($u_{fA}$) audit niveau de tension lorsque la première tension ($u_{an}$) aux bornes du premier condensateur ($C_a$) est supérieure audit niveau de tension.

3. Convertisseur électrique pour assurer la conversion entre un signal CA ayant au moins trois tensions de phase et un signal CC, comprenant :

   au moins trois bornes CA (a, b, c), une première et une deuxième borne CC (P, N),
   une unité de commande (15),
   au moins trois modules convertisseurs (11) couplés à l'une respective des au moins trois bornes CA, dans lequel chacun des au moins trois modules convertisseurs comprend :

   un premier étage de convertisseur (12) comprenant un premier nœud de commutation (A),
   un deuxième étage de convertisseur (13) comprenant un deuxième nœud de commutation (B),
   un premier inducteur (L), dans lequel les premier et deuxième nœuds de commutation sont connectés à des bornes opposées du premier inducteur,
   un premier condensateur ($C_a$), dans lequel l'une respective des au moins trois bornes CA et la deuxième borne CC sont connectées à des bornes opposées du premier condensateur, de telle sorte que la deuxième borne CC forme un point neutre (n) des premiers condensateurs ($C_a$) des au moins trois modules convertisseurs,

dans lequel le premier étage de convertisseur (12) comprend des premiers dispositifs de commutation actifs connectés en série entre la borne CA respective et la deuxième borne CC, dans lequel le premier nœud de commutation (A) est un nœud médian des premiers dispositifs de commutation actifs connectés en série,

**caractérisé en ce que** le premier étage de convertisseur (12) et le deuxième étage de convertisseur (13) comprennent chacun un circuit à condensateur volant comprenant au moins un condensateur volant ($C_{fA}$, $C_{fB}$) couplé de manière opérationnelle aux premier et deuxième nœuds de commutation (A, B) respectifs, et **en ce que** les premiers dispositifs de commutation actifs comprennent un premier commutateur ($T_{A1}$) configuré pour assurer une connexion entre une première borne de l'au moins un condensateur volant ($C_{fA}$) respectif et la borne CA respective et un dispositif de commutation bidirectionnel actif et comprennent une paire de commutateurs ($T_{A2}$, $T'_{A2}$) configurée pour assurer une connexion entre les bornes de l'au moins un condensateur volant ($C_{fA}$) respectif et le premier nœud de commutation (A), dans lequel la deuxième borne de l'au moins un condensateur volant ($C_{fA}$) du premier étage de convertisseur (12) est connectée au point neutre (n) par le biais du dispositif de commutation bidirectionnel actif, dans lequel l'unité de commande (15) est configurée pour éteindre le dispositif de commutation bidirectionnel actif lorsque la première tension ($u_{an}$) chute en dessous d'une tension du condensateur volant ($u_{fA}$) aux bornes de l'au moins un condensateur volant ($C_{fA}$) du premier étage de convertisseur.

4. Convertisseur électrique selon l'une quelconque des revendications précédentes, dans lequel l'unité de commande est configurée pour actionner chacun des modules convertisseurs de telle sorte qu'une tension du condensateur volant ($u_{fB}$) aux bornes de l'au moins un condensateur volant ($C_{fB}$) du deuxième étage de convertisseur est proportionnelle à une tension CC ($U_{cc}$) aux première et deuxième bornes CC.

5. Convertisseur électrique selon l'une quelconque des revendications précédentes, dans lequel l'unité de commande comprend au moins trois modules de commande (16) couplés à l'un respectif des au moins trois modules convertisseurs (11) et configurés pour faire fonctionner les au moins trois modules convertisseurs indépendamment, de préférence dans lequel les au moins trois modules de commande (16) sont configurés pour déterminer des cycles de service ($d_A$, $d_B$) pour actionner le premier et le deuxième étage de convertisseur du module convertisseur respectif sur la base d'une référence de tension du premier condensateur ($C_a$) du module convertisseur respectif.

6. Convertisseur électrique selon l'une quelconque des revendications précédentes, dans lequel l'unité de commande est configurée pour actionner chacun des au moins trois modules convertisseurs (11) selon un premier mode de fonctionnement, dans lequel une tension CC ($U_{cc}$) aux première et deuxième bornes CC est inférieure ou égale à la première tension ($u_{an}$) du premier condensateur ($C_a$) respectif, et selon un deuxième mode de fonctionnement, dans lequel la tension CC ($U_{cc}$) est supérieure à la première tension ($u_{an}$).

7. Convertisseur électrique selon l'une quelconque des revendications précédentes, dans lequel l'unité de commande est configurée pour actionner les circuits à condensateur volant des premier et deuxième étages de convertisseur mutuellement exclusivement via une modulation de largeur d'impulsion.

8. Convertisseur électrique selon l'une quelconque des revendications précédentes, dans lequel le premier étage de convertisseur comprend un circuit de protection (17), le circuit de protection comprenant un condensateur d'équilibrage ($C_p$) connectant l'au moins un condensateur volant ($C_{fA}$) du premier étage de convertisseur (12) à l'une respective des au moins trois bornes CA et/ou à la deuxième borne CC par le biais d'au moins un premier commutateur normalement fermé ($T_p$), l'unité de commande (15) étant configurée pour désactiver l'au moins un premier commutateur normalement fermé.

9. Convertisseur électrique selon l'une quelconque des revendications précédentes, dans lequel chacun des au moins trois modules convertisseurs comprend un deuxième commutateur normalement fermé ($T_p$) connecté entre le deuxième nœud de commutation (B) et le point neutre (n), l'unité de commande (15) étant configurée pour désactiver le deuxième commutateur normalement fermé.

10. Convertisseur électrique selon l'une quelconque des revendications précédentes, dans lequel l'unité de commande (15) est configurée pour actionner un module convertisseur (11) des au moins trois modules convertisseurs, de telle sorte que le deuxième étage de convertisseur (13) est désactivé, et le premier nœud de commutation (A) est fixé au point neutre (n) lorsqu'une tension CC ($U_{cc}$) entre les première et deuxième bornes CC est nulle pendant une opération de démarrage, de préférence dans lequel une tension ($u_{fA}$) aux bornes de l'au moins un condensateur volant ($C_{fA}$) du premier étage de convertisseur est fixée par intermittence à la première tension ($u_{an}$) lorsque la tension CC ($U_{cc}$) est nulle pendant une opération de démarrage.

11. Convertisseur électrique selon l'une quelconque des revendications précédentes, dans lequel l'unité de commande est configurée pour actionner un module convertisseur des au moins trois modules convertisseurs, de telle sorte qu'une tension ($u_{fB}$) aux bornes de l'au moins un condensateur volant ($C_{fB}$) du deuxième étage de convertisseur (13) est fixée à une tension CC ($U_{cc}$) entre les première et deuxième bornes CC pendant une montée en puissance de la tension CC.

12. Convertisseur électrique selon l'une quelconque des revendications précédentes, dans lequel le premier étage de convertisseur et le deuxième étage de convertisseur comprennent un nombre égal de l'au moins un condensateur volant ($C_{fA}$, $C_{fB}$), ou dans lequel le premier étage de convertisseur et le deuxième étage de convertisseur comprennent un nombre différent de l'au moins un condensateur volant ($C_{fA}$, $C_{fB}$).

13. Système d'entraînement de moteur électrique, comprenant le convertisseur électrique (20) selon l'une quelconque des revendications précédentes, dans lequel l'unité de commande est configurée pour actionner le convertisseur électrique comme un onduleur de traction.

14. Système de charge de batterie, en particulier pour charger des batteries d'entraînement de véhicules électriques, dans lequel le système de charge de batterie comprend une alimentation électrique, l'alimentation électrique comprenant le convertisseur électrique (10) selon l'une quelconque des revendications 1 à 12.

FIG 1

FIG 2

FIG 3

FIG 4

FIG 5

FIG 6A

FIG 6B

FIG 6C

FIG 6D

FIG 7

EP 4 189 825 B1

FIG 8

EP 4 189 825 B1

FIG 9

Step 1: Clamping Modulation: $U_{dc} = 0V$

Stage A
- $T'_{A1}$ and $T'_{A2}$: on (clamp A)
- $T_{A2}$: off
- $T_{A1} \begin{cases} \text{on} & (u_{an} \leq 0.5\, u_{an,max}, \text{ clamp } C_{fA}) \\ \text{off} & (u_{an} > 0.5\, u_{an,max}) \end{cases}$

Stage B
- All off

Step 2: Active start-up control: $U_{dc} = [0V, U_{dc,min}]$

Stage A $(u_{an} \leq 0.5\, u_{an,max})$
- $T_{A1}$ and $T'_{A1}$: on (clamp $C_{fA}$)
- $T_{A2}$ and $T'_{A2}$: **PWM**

Stage A $(u_{an} > 0.5\, u_{an,max})$
- Synchronous 2L **PWM**

Stage B
- $T_{B1}$ and $T'_{B1}$ on (clamp $C_{fB}$)
- $T_{B2}$ and $T'_{B2}$ off (diode rectif.)

Step 3: DC voltage ramp-up: $U_{dc} = [U_{dc,min}, U_{dc}^*]$

Step 4: Steady-state operation: $U_{dc} = U_{dc}^*$

FIG 10

EP 4 189 825 B1

FIG 11

FIG 12

**FIG 13**

**FIG 14**

**FIG 15**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. W. KOLAR** ; **T. FRIEDLI**. The essence of three-phase pfc rectifier systems-part i. *IEEE Transactions on Power Electronics*, January 2013, vol. 28 (1), ISSN 0885-8993, 176-198
- **TA MEYNARD** ; **H FOCH**. Multilevel choppers for high voltage applications. *European Power Electronics (EPE) Journal*, March 1992, vol. 2 (1), 45-50
- **M. ANTIVACHIS** ; **D. BORTIS** ; **L. SCHRITTWIESER** ; **J. W. KOLAR**. Three-Phase Buck-Boost Y-Inverter with Wide DC Input Voltage Range. *Proc. of the IEEE Applied Power Electronics Conference and Exposition (APEC)*, March 2018, 1492-1499
- **M. ANTIVACHIS** ; **D. BORTIS** ; **D. MENZI** ; **J. W. KOLAR**. Comparative evaluation of y-inverter against three-phase two-stage buck-boost dc-ac converter systems. *Proc. of the IEEE International Power Electronics Conference (IPEC - ECCE Asia)*, May 2018, 181-189
- **E. CANDAN** ; **A. STILLWELL** ; **N. C. BROOKS** ; **R. A. ABRAMSON** ; **J. STRYDOM** ; **R. C. N. PILAWA-PODGURSKI**. A 6-level flying capacitor multi-level converter for single phase buck-type power factor correction. *Proc. of the IEEE Applied Power Electronics Conference and Exposition (APEC)*, March 2019, 1180-1187
- **Y. ZHANG** ; **H. JIN** ; **Y. ZHANG**. Full-duty-cycle regulated three-level ac/ac converter with self-following flying capacitor. *IEEE Access*, August 2018, vol. 6, 48428-48437
- **Z. YE** ; **Y. LEI** ; **Z. LIAO** ; **R. C. N. PILAWA-PODGURSKI**. Investigation of capacitor voltage balancing in practical implementations of flying capacitor multilevel converters. *2Proc. of the IEEE Workshop on Control and Modeling for Power Electronics (COMPEL)*, July 2017, 1-7
- **M. KHAZRAEI** ; **H. SEPAHVAND** ; **K. A. CORZINE** ; **M. FERDOWSI**. Active capacitor voltage balancing in single-phase flying-capacitor multilevel power converters. *IEEE Transactions on Industrial Electron-ics*, February 2012, vol. 59 (2), 769-778